# EUROPEAN PATENT SPECIFICATION

(11) **EP 3 394 522 B1**
(45) Date of publication and mention of the grant of the patent: **26.08.2020**
(21) Application number: 16831589.3
(22) Date of filing: 20.12.2016
(51) Int. Cl.: F24H 1/28, F24H 8/00, F24H 9/00

(54) **FIRED HEAT EXCHANGER**
BEHEIZTER WÄRMETAUSCHER
ÉCHANGEUR DE CHALEUR À COMBUSTION

(30) Priority: 21.12.2015 PL 41542615
(43) Date of publication of application: 31.10.2018
(73) Proprietor: AIC S.A., 81-577 Gydnia (PL)
(72) Inventor: SZCZEPANSKI, Krzysztof, 83-110 Tczew (PL)
(74) Representative: Kwapich, Anna
(86) International application number: PCT/PL2016/000153
(87) International publication number: WO 2017/111636

(56) References cited:
- WO-A1-2012/158050
- WO-A1-2014/142688
- WO-A2-2013/048269
- US-A- 5 437 248
- US-A1- 2012 138 278

## Description

The invention concerns a fired heat exchanger for a condensing boiler. The solution belongs to the group of tubular exchangers designed for exchanging heat between gas and liquid. It is used in heat engineering, particularly domestic central heating installations.

There are many known types of tubular heat exchangers. Their structure depends on the place of their application, the circulating agent used, and the specific demands and needs. All tubular heat exchangers of the liquid-gas type share a common feature, namely they all have a system of tubular elements transferring hot gas or liquid, fitted in between two sieve walls of a chamber enclosed in an outer jacket, where the heated water circulates. In domestic central heating installations, where the heat is generated by burning gas, an exemplary heat exchanger is provided with a combustion chamber mounted above the top sieve wall, and has gas inlet stub pipe, gas exhaust stub pipe, and water inlet and outlet stub pipes. In such exchangers the tube elements set through which the combustion gases flow is positioned vertically, and the water heated by the gases circulates around the tube sets. The tube elements set is placed inside the outer jacket, usually cylindrical in shape, which also encases the entire combustion chamber or a part thereof. In known exchangers of the type also the combustion chamber is cylindrical or conical in shape with the diameter equal or smaller than the diameter of the outer jacket. Depending on the type of the fired tubular heat exchanger, the tube elements used in the tube systems differ in their diameters and shapes, and may be equipped with different auxiliary elements, such as baffles or additional tubes etc., so as to enhance efficiency of the heat exchange.

Known from the international patent application published under No. WO2009/078577 is a boiler provided with a cylindrical housing, vertically positioned liquid-gas exchanger, burner installed in the combustion chamber of the exchanger, inlet and outlet of the heated water, fume exhaust duct, gas inlet, fittings which supply the air and mix it with the gas appropriately, as well as control devices. This embodiment of the heat exchanger contains a set of tubular elements rectangular in cross section, regularly distributed inside the outer jacket forming the chamber, through which the heated water flows. The top ends of the tubes are anchored in a flat top sieve wall positioned under the cylindrical combustion chamber. Bottom ends of the tubes, which pierce through the flat bottom sieve wall and cross the exhaust gas recirculation chamber, are connected with the fume exhaust duct. The water chamber is fitted with flat disc-shaped baffles with perforations through which the tubular elements run. These separating baffles disturb water circulation and thus improve heat exchange. They are positioned perpendicular to the tubular elements, and their diameter is smaller than the inner diameter of the heat exchanger jacket to leave some space between the baffles and the jacket for the water to flow. The said description discusses the correlation between the width of this space and water circulation, as well as the pressure of the water on the baffles. In the described embodiment it is proposed to equip the baffles with circulation tubes to prevent increased pressure of water on the baffles. These tubes are anchored in the topmost baffle on the one end, and the lowest baffle on the opposite end. One of the described structural variants of the embodiment envisages leaving some space between the walls of the tubular element and the edges of the perforations in the baffles through which the tubes run to increase water circulation disturbance and improve heat exchange efficiency. The described boiler is equipped with an additional independent water circuit consisting of spiral tubes arranged in the water chamber around the combustion chamber.

The boiler-designated exchanger of heat between gas and water, as disclosed in publication EP0926439, has a cylindrical outer jacket which encases a cylindrical combustion chamber having a wavy side wall, where under the combustion chamber there is a set of vertical tubular elements fitted in between the top and bottom sieve walls and where the top sieve wall serves as the bottom of the combustion chamber. In cross section, the exchanger tubes resemble the shape of flattened ellipsis, with various hollows, indentations, and bays formed in their side walls.

Also known prom Polish patent application PL 219104 is a heat exchanger having an outer jacket which encases a set of vertical tubular elements with their both ends anchored in the sieve walls, where the jacket is equipped with a combustion chamber positioned over the top sieve wall, and with perforated baffles fitted transversely to the tubular elements. In this exchanger, the outer jacket is conical in shape with the diameter increasing towards the top, and the baffle placed under the top sieve wall has the shape of a cone with its apex pointing down.

The patent application published under No. US2012/0138278 is disclosed a heat exchanger comprising an outer jacket with an inner set of vertical pipe element fastened at their opposing ends in upper and lower sieve walls, and having a gas combustion chamber located above the upper sieve wall, as well as partitions mounted crosswise of the pipe elements. The heat exchanger is also provided with liquid, gas and exhaust fumes inlet and outlet stub pipes. The outer jacket is conically shape. An upper partition is haped as a cone and has a central opening in its central region.

Known from the international patent application published under No. WO2013/048269 is a fired heat exchanger fitted with a chamber for a liquid encased in an outer jacket which features a liquid inlet and outlet, where inside the chamber there is a set of vertical tubular elements for the flow of the fumes and at least one transverse baffle, and where the ends of tubular elements are anchored in the sieve bottom of the combustion chamber on the one side and in the sieve wall of the condensate tank featuring gas and condensate discharge stub pipes on the opposite side, wherein mounted close to the sieve bottom of the combustion chamber, inside the chamber for the liquid, is a horizontal top baffle with a single central opening for the flow of the liquid, according to the preamble of the independent claim.

The fired heat exchanger according to the invention is is defined by the features of claim 1.

In the first embodiment variant, the fired heat exchanger features one spiral baffle which begins at the central circular opening.

In another variant the heat exchanger has more than one spiral baffle, where each spiral baffle begins at the central opening the shape of which is aligned to fit the number of those spiral baffles so that they can begin at the opening edge.

The spiral baffles may form ducts of different widths with a different number of tubular elements distributed across their width.

Preferably, the spiral ducts are basically of the same width.

In the area between the top horizontal baffle and the sieve bottom, the vertical tubular elements are cylindrical in shape and are arranged so as to form rings or spirals in the spiral ducts.

An advantage of the solution according to the invention consists in that it enables optimisation of the flow of the liquid under the sieve bottom of the combustion chamber, where the optimisation is aimed at mitigating the process of lime scale deposition. It is achieved by using a spiral baffle which enables controlling the temperature and the speed of the liquid flow under the sieve bottom.

An exemplary embodiment of the fired heat exchanger for a condensing boiler according to the invention is illustrated on a drawing, where Fig. 1 diagrammatically presents the longitudinal section of the exchanger, Fig. 2 shows the interior of the exchanger, and Fig. 3 depicts the top horizontal baffle featuring the spiral baffles in four variants.

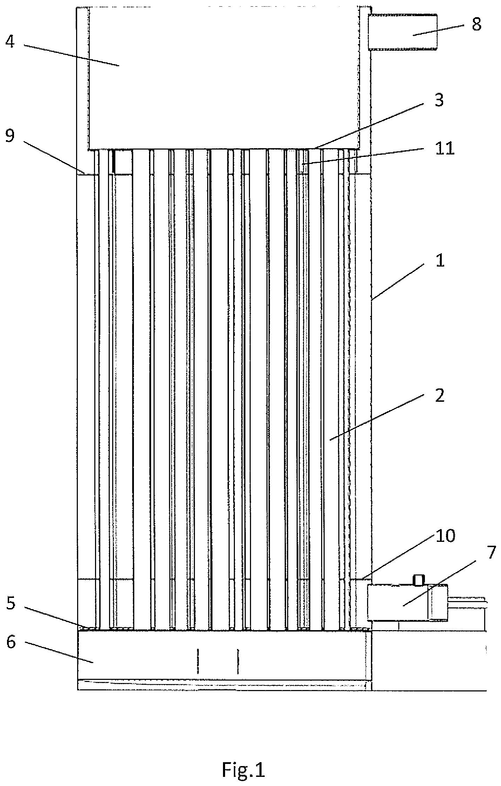

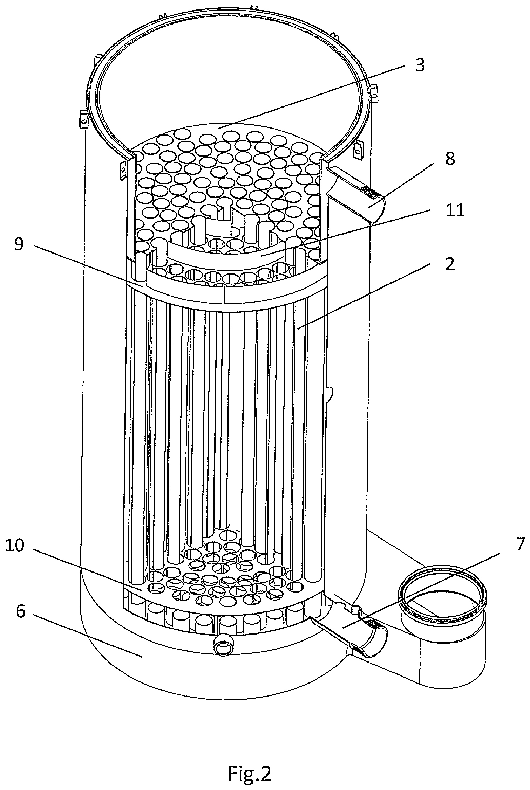

In the exemplary embodiment shown on Fig. 1, Fig. 2, and Fig. 3, the fired heat exchanger designated for a condensing boiler has a water chamber encased in a cylindrical outer jacket 1 with a set of vertical tubular elements 2 circular in cross-section mounted inside the jacket, where the top tube ends are welded to the top sieve wall which also serves as the sieve bottom 3 of the cylindrical combustion chamber 4, and the bottom tube ends are welded to the bottom sieve wall 5, under which there is a condensate tank 6 fitted with gas and condensate outlets. In the exemplary embodiment variant the sieve bottom 3 of the combustion chamber 4 and the bottom sieve wall 5 are given the shape of flat discs. The diameter of the combustion chamber 4 is smaller than the diameter of the outer jacket 1, so that the chamber for the liquid envelops the combustion chamber 4 from outside. There is an inlet 7 in the bottom part of the chamber for the liquid, and an outlet 8 for the heated water in its top part. Fitted transversely to the set of tubular elements 2, in their top section, immediately under the sieve bottom 3 of the combustion chamber 4, there is a top horizontal baffle 9, and mounted in their bottom section over the bottom sieve wall 5 there is the bottom horizontal baffle 10. The top and bottom baffles 9 and 10 feature a number of perforations the cross-section of which corresponds with the cross-section of the tubular elements 2 which pierce through those perforations. There are slots for the flow of water formed in the bottom baffle 10, where the slots are given any shape and arranged as desired, and the top baffle 10 adheres tightly to the walls of the outer jacket 1 and features a single central opening 12 for the flow of water. Between the top horizontal baffle 9 and the sieve bottom 3 of the cylindrical combustion chamber 4 there is a vertical spiral baffle 11 which adheres tightly to both the top horizontal baffle 9, and to the sieve bottom 3. The walls of the spiral baffle 11 form spiral ducts 13 which direct the flow of the liquid in the area between the top horizontal baffle 9 and the sieve bottom 3 of the combustion chamber 4. In one of the exemplary embodiment variants, the central opening 12 is circular in shape with the initial length of the spiral baffle 11 running along some of its circumference.

The exchanger is designated for burning natural gas and propane, in effect of which heat is generated for heating the water used in central heating installations. The combustion of gas takes place in the top section of the exchanger inside the combustion chamber 4, from where the fumes flow down inside the tubular elements 2, transmitting heat to the heated water circulating inside the outer jacket 1 between the inlet 7 and outlet 8 for the heated water. While flowing down, the fumes cool in the water chamber down to the temperature below the dew point and accumulate in the condensate tank 6, from where they are discharged outside through the condensate outlet and combustion gas outlet. Outside the tubular elements 2 the heated water flows opposite to the direction of the flow of fumes, i.e. the water is supplied through the inlet stub pipe 7 fitted in the bottom section of the exchanger, from where it flows through the slots in the bottom horizontal baffle 10 and up, flowing around the tubular elements 2 and the combustion chamber 4 on its way, whereupon the water is discharged from the exchanger through the outlet stub pipe 8 fixed in the top section of the exchanger. In the top section of the water chamber the flow is directed through the central opening 12 in the top horizontal baffle 9, above which the stream of water is set in spiral motion inside the spiral ducts 13 formed by the walls of the vertical spiral baffle 11. In this way, the water above the top horizontal baffle 9 flows from the baffle centre towards the edge of the sieve bottom 3 of the combustion chamber 4, and on its way it flows around and cools down the sieve bottom 3 and the tubular elements 2 fitted along the water flow path. Then, the water, still in spiral motion, flows around the side walls of the combustion chamber 4 and reaches the outlet stub pipe 8. Thanks to the spiral flow around the sieve bottom 3 of the combustion chamber 4, forced by the vertical spiral baffle 11, optimal conditions for cooling down of the sieve bottom 3 of the combustion chamber 4 and the top sections of the tubular elements 2 are obtained, in effect of which lime scale deposition and settlement is reduced. With an appropriate number of spiral baffles installed, the stream of water flowing out of the central opening in the top baffle is split to the desired number of streams flowing in spiral ducts formed in between the walls of the spiral baffles. The number of the spiral baffles, the width and height of the ducts and the arrangement of tubes within the ducts in a specific heat exchanger embodiment are selected using mathematical tools applied in fluid mechanics so as to achieve optimal linear speed of the spiral flow of water, which will enable cooling of the sieve and tubes down to the desired temperature while keeping the flow resistance at the acceptable level.

In the exemplary embodiment the fired exchanger is made of stainless steel and has a cylindrical outer jacket 3 mm thick, 1500 mm high, 690 mm in diameter, as well as a cylindrical combustion chamber 350 mm high with the diameter of 640 mm, 109 cylindrical tubular elements 44 mm in diameter and 1160 mm in length and two transverse baffles, the top one and the bottom one, each 2 mm thick. Between the top baffle and the 6mm-thick sieve bottom of the combustion chamber there is a single vertical spiral baffle with walls 1.5 mm thick and 50 mm high, their height equal to the distance between the top baffle and the sieve bottom.

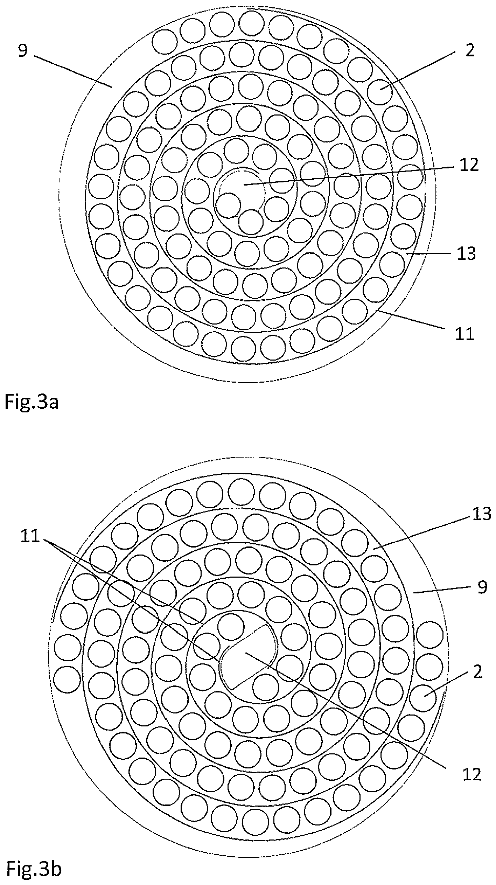

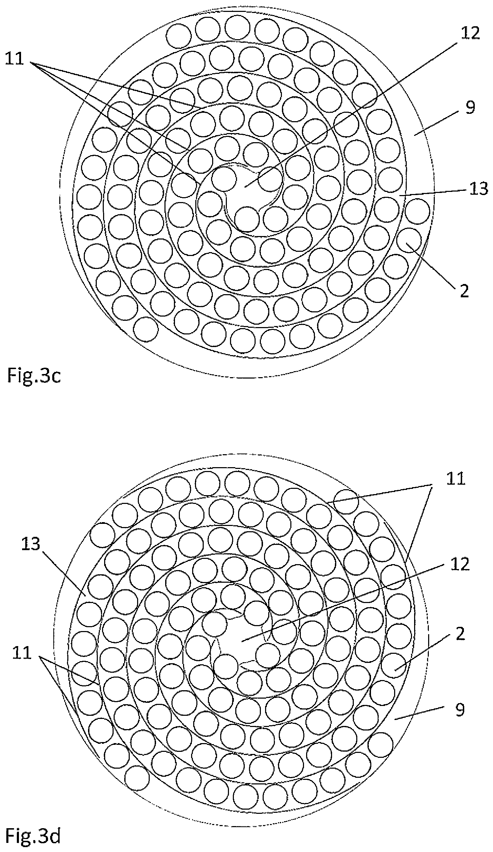

There may be any desired number of vertical spiral baffles 11 mounted between the top baffle and the sieve bottom, where the baffles begin at the central opening 12 and divide the stream of water flowing out of the opening to several streams. As demonstrated in exemplary embodiments shown on Fig. 3, with a single spiral baffle 11 the central opening 12 in the top baffle 9 is given the shape of a circle with the initial length of the spiral baffle running along some of its circumference, whereas with two and four spiral baffles 11 the shape of the central opening 12 resembles a rectangle, and with three spiral baffles 11 the shape of the central opening resembles a triangle and each of the spiral baffles begins at one of its apices.

In other variants the vertical spiral baffle can be mounted between the top horizontal baffle and the sieve bottom of the combustion chamber irrespective of the structure of the fired heat exchanger, or the shapes of the outer jackets or the combustion chambers. In particular, the jackets and chambers may be cylindrical or conical, rolled or pressed, with embossments, reinforcing elements, etc. The chamber sieve bottom can also be conical in shape, or feature a projection. Also different can be cross-sections and arrangement of the tubular elements of the exchanger (flat, circular, wavy, pressed, ribbed, etc.), as well as the number and arrangement of other baffles.

## Claims

1. A fired heat exchanger comprising an outer jacket (1), a combustion chamber (4), a condensate tank (6) and a chamber for a liquid encased in the outer jacket (1) which features a liquid inlet and outlet (7,8), where inside the chamber there is a set of vertical tubular elements (2) for the flow of the fumes and at least one transverse baffle, and where the ends of the tubular elements (2) are anchored in a sieve bottom (3) of the combustion chamber (4) on the one side of the tubular elements (2), and in a sieve wall of the condensate tank (6) featuring gas and condensate discharge stub pipes on the opposite side of the tubular elements (2), wherein mounted close to the sieve bottom (3) of the combustion chamber (4), inside the chamber for the liquid, is a horizontal top baffle (9) with a single central opening (12) for the flow of the liquid, **characterised in that** the horizontal top baffle (9) is fitted with at least one vertical spiral baffle (11) adhering tightly to the sieve bottom (3) and the top horizontal baffle (9), where the spiral baffle forms spiral ducts (13) for the flow of the liquid under the sieve bottom (3).

2. The fired exchanger according to Claim 1, **characterised in that** it features one spiral baffle (11) which begins at the central circular opening (12).

3. The fired exchanger according to Claim 1, **characterised in that** it has more than one spiral baffle (11), where each spiral baffle begins at the central opening (12), the shape of which is aligned to fit the number of those spiral baffles so that they can begin at the opening edge.

4. The fired exchanger according to Claims 1-3, **characterised in that** the spiral baffles (11) form ducts (13) of different widths with a different number of tubular elements (2) distributed across their width.

5. The fired exchanger according to Claims 1-3, **characterised in that** the spiral ducts (13) are basically of the same width.

6. The fired exchanger according to Claim 5, **characterised in that** in the area between the top horizontal baffle (9) and the sieve bottom (3) the vertical tubular elements (2) are cylindrical in shape and are arranged so as to form rings or spirals in the spiral ducts (13).

## Patentansprüche

1. Beheizter Wärmetauscher mit einem Außenmantel (1), einer Brennkammer (4), einem Kondensatbehälter (6) und einer Flüssigkeitskammer, die mit Außenmantel (1) geschlossen ist und über einen Einlauf und Auslauf (7, 8) verfügt und in welcher sich mehrere vertikale Rohrelemente (2) zum Brenngasfluss und mindestens eine Quertrennwand befinden, wobei die Enden der Rohrelemente (2) am Siebboden (3) der Brennkammer (4) auf einer Seite der Rohrelemente (2) und an der Siebwand des Kondensatbehälters (6) befestigt sind, der mit Auslaufstutzen für Gas und Kondensat auf der den Rohrelementen (2) abgewandten Seite ausgerüstet ist und beim Siebboden (3) der Brennkammer (4), in der Flüssigkeitskammer die horizontale obere Trennwand (9) mit einem Zentralloch (12) zum Flüssigkeitsfluss angeordnet ist, **dadurch gekennzeichnet, dass** die horizontale obere Trennwand (9) mindestens eine vertikale spiralförmige Trennwand (11) aufweist, die am Siebboden (3) und an die horizontale obere Trennwand (9) dicht anliegt, wobei die spiralförmige Trennwand (11) spiralförmige Kanäle (13) zum Flüssigkeitsfluss unter dem Siebboden (3) bildet.

2. Beheizter Wärmetauscher nach Anspruch 1, **dadurch gekennzeichnet, dass** er über eine spiralförmige Trennwand (11) verfügt, die am Zentralloch (12) beginnt.

3. Beheizter Wärmetauscher nach Anspruch 1, **dadurch gekennzeichnet, dass** er über mehrere spiralförmige Trennwände (11) verfügt, wobei jede spiralförmige Trennwand am Zentralloch (12) beginnt, dessen Form so an die Anzahl der spiralförmigen Trennwände angepasst ist, dass sie an dessen Rand beginnen.

4. Beheizter Wärmetauscher nach Anspruch 1-3, **dadurch gekennzeichnet, dass** die spiralförmigen Trennwände (11) unterschiedlich breite Kanäle (13) bilden, welche über verschiedenen Anzahl von Rohrelementen (2) an deren Breite verfügen.

5. Beheizter Wärmetauscher nach Anspruch 1-3, **dadurch gekennzeichnet, dass** die spiralförmigen Kanäle (13) grundsätzlich die gleiche Breite aufweisen.

6. Beheizter Wärmetauscher nach Anspruch 5, **dadurch gekennzeichnet, dass** im Bereich zwischen der horizontalen oberen Trennwand (9) und dem Siebboden (3) die vertikalen Rohrelemente (2) zylindrisch sind und ring- oder spiralförmig in spiralförmigen Kanälen (13) angeordnet sind.

## Revendications

1. Un échangeur de chaleur à combustion muni d'une enveloppe extérieure (1), une chambre de combustion (4), un réservoir de condensat (6) et une chambre à liquide fermée par l'enveloppe extérieure (1) avec entrée et sortie de liquide (7, 8), à l'intérieur de laquelle se trouve un ensemble d'éléments tubulaires verticaux (2) pour l'écoulement des gaz de combustion et au moins une chicane transversale, les extrémités des éléments tubulaires (2) étant fixées dans le fond en tamis (3) de la chambre de combustion (4) de l'un côté de ces éléments tubulaires (2) et dans la paroi en tamis du réservoir de condensat (6), équipé de tubulures de sortie de gaz et de condensat, du côté opposé des éléments tubulaires (2), et à proximité du fond en tamis (3) de la chambre de combustion (4), une chicane horizontale supérieure (9) avec un trou central (12) pour l'écoulement du liquide est montée dans la chambre à liquide, **caractérisé en ce que** la chicane horizontale supérieure (9) est équipée d'au moins une chicane verticale en spirale (11) adjacente au fond en tamis (3) et à la chicane horizontale supérieure (9), la chicane en spirale (11) formant des conduits en spirale (13) pour l'écoulement du liquide sous le fond en tamis (3).

2. L'échangeur de chaleur à combustion selon la revendication 1 **caractérisé en ce qu'**il a une chicane en spirale (11) partant du trou central circulaire (12).

3. L'échangeur de chaleur à combustion selon la revendication 1 **caractérisé en ce qu'**il a plus d'une chicane en spirale (11), chaque chicane en spirale partant du trou central (12), dont la forme est adaptée au nombre de chicanes en spirale de sorte qu'elles partent depuis son bord.

4. L'échangeur de chaleur à combustion selon les revendications d'1 à 3 **caractérisé en ce que** les chicanes en spirale (11) forment des conduits (13) de différentes largeurs avec un nombre différent d'éléments tubulaires (2) situés sur leur largeur.

5. L'échangeur de chaleur à combustion selon les revendications d'1 à 3 **caractérisé en ce que** les conduits en spirale (13) sont essentiellement de largeur égale.

6. L'échangeur de chaleur à combustion selon la revendication 5 **caractérisé en ce que** dans la zone située entre la chicane horizontale supérieure (9) et le fond du tamis (3), les éléments tubulaires verticaux (2) sont de forme cylindrique et sont disposés annulairement ou en spirale dans des conduits en spirale (13).
